# EUROPEAN PATENT APPLICATION

(11) **EP 1 033 560 A1**
(43) Date of publication of application: **06.09.2000**
(21) Application number: 00301284.6
(22) Date of filing: 18.02.2000
(51) Int. Cl.: G01G 3/16

(54) **Measuring food products during processing**

(30) Priority: 03.03.1999 US 261423
(71) Applicant: THE BOC GROUP, INC., Murray Hill, New Providence, New Jersey 07974-2082 (US)
(72) Inventor: Wardle, David G., Tadworth, Surrey KT20 7UG (GB); Davenport, Paul L., Jersey City, New Jersey 07302 (GB)
(74) Representative: MacLean, Martin David

(57) **Abstract**

In processing food items a portion of the weight of the item is lost due to evaporation of a fluid or sublimation of a solid from the item during freezing or cooking. An apparatus having an absorbent weight attached to the end of an arm is used to indirectly monitor the change in the mass of food items during processing. Changes in the natural or resonant frequency of oscillation of the weighted arm provides data as to the change in the mass of the weight on the arm and, thereby, information as to the rate of change of the mass of food items during processing. This information may be used to determine how to make food processes more efficient in order to reduce loss in weight and, therefore, value of food items sold by weight. Alternatively, the method or the device could be used to compare the differences in yield between types of freezing, i.e., between mechanical refrigeration and cryogenics. Data collected by the device can either be downloaded through a data port to a computer or could be transmitted to a computer via a wireless link.

## Description

The present invention relates to a method and apparatus for determining the amount (weight) of a food product lost during the processing of that food product. More specifically, this invention is a method and apparatus for estimating the amount of water, other fluid or solid lost due to evaporation or sublimation of from a food product during processing.

The food industry produces a large quantity of standardized food products. In order to increase the likelihood of producing a high-quality standardized food product the industry is relying to an increasing extent on electronic control systems and tools which monitor various food manufacturing processes and input variables in order to monitor the quality of the food product as well as to minimize waste and decrease costs.

One problem associated with the processing of food items is the reduction in weight and, therefore, value of the food items due to the loss of certain components of the food item during processing. Weight loss and, therefore, yield loss is primarily due to the loss of moisture, or of other fluid or solid material (e.g. fat, oil, alcohol, ice, etc.) from the food item during processing.

In order to reduce the yield loss of food items during processing there needs to be a means for providing data during the processing of the mass and the changes in mass of the food item. Currently, it is only possible to measure the weight or mass of food items if the items are diverted from production. This does not enable a food processor to identify which sections of the processing are resulting in the greatest loss of yield, i.e., mass or weight, in a continuous manner.

In light of the foregoing, there is a need to be able to estimate the loss in weight in food products being processed in a food processing line in a continuous manner without diverting actual food items from the processing line.

Accordingly, the present invention provides apparatus for estimating the change in mass of a food item during processing comprising: an arm; a weight capable of absorbing a fluid or of supporting a solid on at least one end of the arm; an oscillator adapted to oscillate the arm and weight at its natural harmonic frequency and generating a signal indicative of such oscillation; a frequency module capable of determining the instantaneous natural harmonic frequency of the weight and arm from the signal indicative of oscillation; and, a data logger capable of logging data as to the natural harmonic frequency of oscillation of the arm as the natural harmonic frequency of oscillation changes due to changes in the mass of said weight as the fluid evaporates or the solid sublimates during processing.

The invention also provides a method of monitoring the change in mass of a food item during processing of the food item comprising the steps of: introducing a weighted arm into a food process; oscillating the weighted arm; determining the frequency of oscillation of the weighted arm, and logging the frequency of oscillation for a plurality of time intervals into a memory device.

Such arrangements enable continuous monitoring through the estimation of the change in the mass of a food item during processing. Furthermore, the invention enables the measurement of such changes in mass in conditions of high air flow and temperature extremes. Apparatus in accordance with the invention is self-contained and can be placed in a food processing line and travel through the process with actual food items. Additionally, the invention provides a method and an apparatus which are capable of estimating changes in mass of food items in order to identify the area of processing which leads to the greatest yield loss.

To achieve these and other advantages and in accordance with the purpose of the invention, as embodied and broadly described herein, the invention includes an apparatus having a vibrating arm with an object or weight attached to one end of the vibrating arm such that changes in the mass of the object attached to the vibrating arm will change the frequency of its natural oscillation.

The vibrating arm may be attached at its other end to an oscillator which induces the vibration in the arm.

Data regarding the frequency of natural oscillation of the arm may be stored in a data logger for later use.

All of the electronic components of the present invention are preferably enclosed in a housing while the vibrating arm and object are open to the external environment.

The logged frequency data may be transmitted through a serial data port or transmitted to a local receiver for analysis in an external computer.

The weight may be heated in order to simulate cooking or a cooked state of the food items being processed.

The weight may be a material which absorbs a volatile fluid or a substrate on which a solid capable of sublimation is placed. Evaporation of the fluid from the weight or sublimation of the solid from the weight provides a change in mass which is then measured by the device thereby providing data regarding the food process being studied.

The invention will now be described by way of example and with reference to the accompanying drawings, in which:

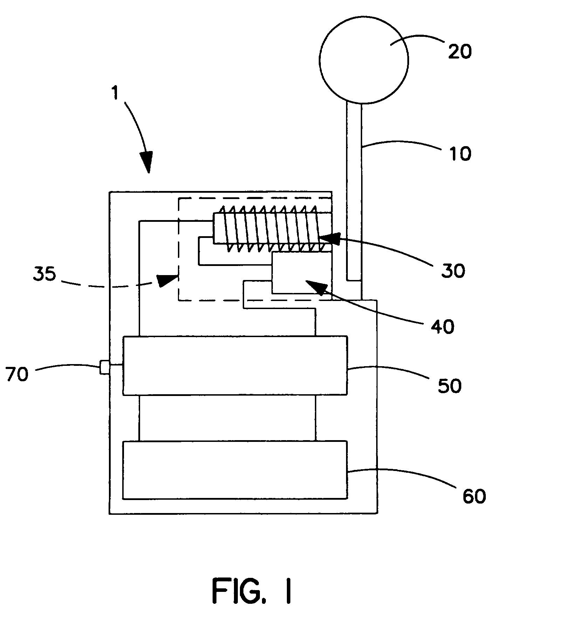

Figure 1 is a diagram of an embodiment constructed according to the present invention;
Figure 2 is a graph depicting the correlation between the mass of the object and the frequency of natural oscillation of the vibrating arm;
Figure 3 is a schematic view of a preferred embodiment of the apparatus of the present invention showing the internal and external components of the present invention, and
Figure 4 is a functional diagram of the frequency module used a preferred embodiment of the present invention.

Referring to Figure device 1 comprises arm 10 to which is attached a weight 20 on one end. Arm 10 must be formed of a magnetic material, and is preferably a stainless steel alloy having magnetic properties. The weight 20 is made of a material which preferably is capable of absorbing a fluid such as water, fats, oils, fatty acids as well as other food ingredients. Weight 20 then changes weight as the moisture or other fluid either evaporates from or is absorbed by weight 20.

In addition to the material described above for weight 20 a material may also be used which is capable of absorbing a volatile substance, such as alcohol, acetone or other solvents. The use of different materials and different absorbents will enable the rate at which evaporation occurs over time to be changed easily for any set of conditions being monitored. For example, if in a specific food process the evaporation of water would be so minimal as to be undetectable it may be necessary to use a liquid which is more volatile, i.e., which has a lower evaporating point temperature. Also, it is possible that weight 20 could be a solid substrate with which to support a solid such as solid carbon dioxide or ice so that the amount of material which sublimates during a particular process can be measured. Those skilled in the art will appreciate that the choice of material for weight 20 and for the fluid or solid which is place in or on weight 20 is dependent on the process being monitored and studied as well as the need to collect usable data. The amount of evaporation or sublimation over time during a particular process may be modified by selecting a more or less volatile fluid or solid substance in order to maximize the difference between the minimum and maximum values of the data received from the device during that process.

An oscillator 35 causes the arm 10 to oscillate at the natural harmonic frequency of the arm 10 and weight 20. Oscillator 35 comprises a magnetic coil 30 which induces movement in the arm 10 through magnetic attraction, and a proximity switch 40 which is used to switch the magnetic coil on and off so as to cause arm 10 to oscillate.

The frequency at which the arm 10 oscillates is determined from the on/off signal generated by the proximity switch 40 of oscillator 35 and the frequency data is logged over time in data logger 50. Data regarding the frequency at which arm 10 oscillates and the time at which it oscillates at a specific frequency can be retrieved from data logger 50 through port 70 by downloading the data to a personal computer or other digital device (not shown). Alternatively, the data may be transmitted from the device using an internal transmitter (not shown) to transmit the data to a local receiver which is then connected to a host computer for analysis of the data. Battery 60 provides power to the data logger 50, oscillator 35 and proximity switch 40.

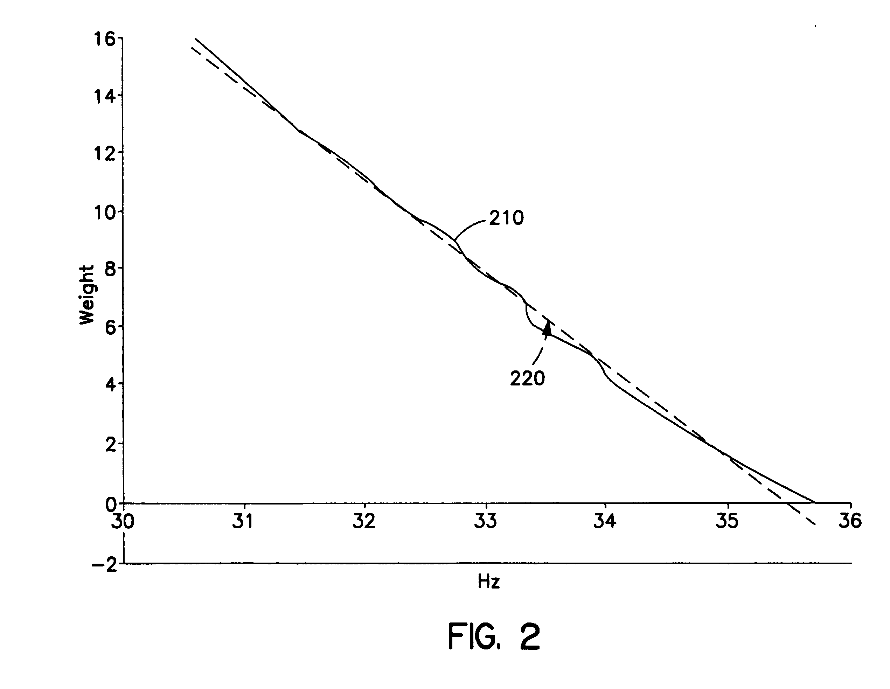

Figure 2 is a graph representing the correlation between the mass (in grams) of weight 20 and the frequency of natural oscillation, i.e. the resonant frequency of the weighted arm (in Hz). Plot 210 depicts data received regarding the frequency of oscillation of arm 10. Plot 220 is a linear regression of plot 210. For any given weight 20 and arm 10 a plot similar to that found in Figure 2 would need to be deduced experimentally by one skilled in the art. Using the information with regard to the frequency of the oscillation of arm 10 it is possible to determine the mass of the weight 20 and, therefore, changes in mass over time. Knowing the change in mass over time and the surface area of the weight 20 it is possible to calculate a rate of change of mass per unit area. The shape of weight 20 should be similar to the shape of the standardized food product being processed in order to increase the correlation between yield loss in weight 20 and the yield loss in actual food items.

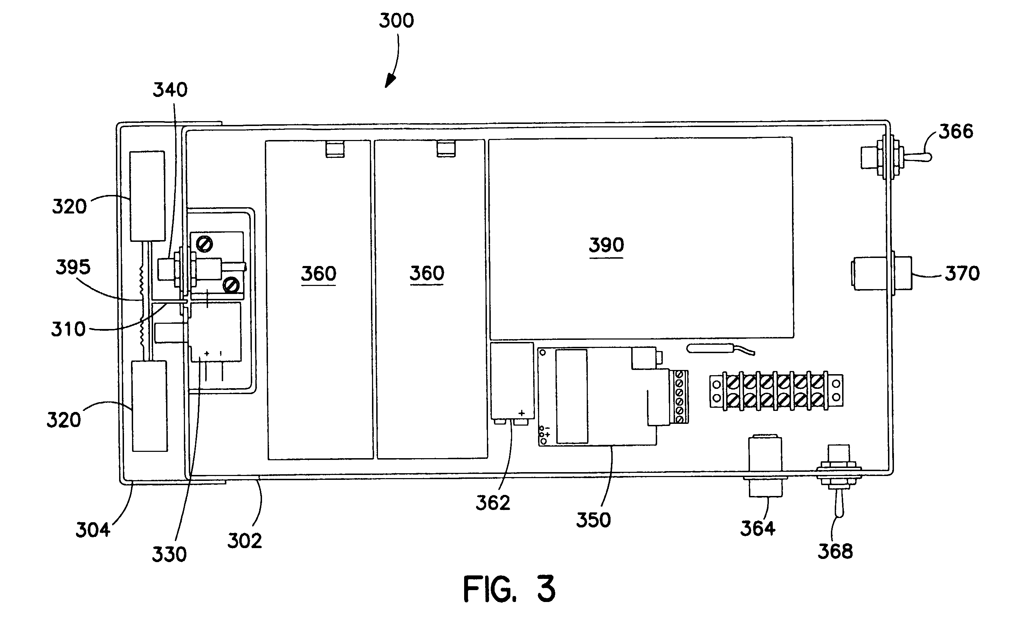

In Figure 3 a preferred embodiment of the present invention is set forth, in which device 300 is housed in enclosure 302 and partial enclosure 304. Enclosure 302 is used to protect the electronics and power source from the harsh environment in which the device 300 is likely to be used, i.e., in temperature extremes from - 200 C to + 200 C. Partial enclosure 304 is designed to protect the weights 320 from damage due to impact, but must also have sufficient openings to allow weights 320 to be exposed to the food processing environment in order to monitor the effect of that environment on the device and, therefore, on food items. Enclosure 302 and partial enclosure 304 are made of stainless steel in the preferred embodiment due to its approval for use in food processing environments. Other non-reactive metals or polymers could be used, however, if they are approved for use in food processing and can withstand the extremes of food processing environments.

Enclosure 302 houses a portion of the oscillator which comprises a magnetic coil 330 and a proximity sensor 340 which turns the magnetic coil on and off to attract and release the arm 310. Signals from the proximity switch 340 are used to identify the frequency at which the arm 310 oscillates. Proximity sensor 340 is connected to frequency module 390 which reads the pulse wave from the proximity sensor 340 and determines the frequency of the pulse wave and generates an analog signal between 0 and 5 V indicative of the frequency.

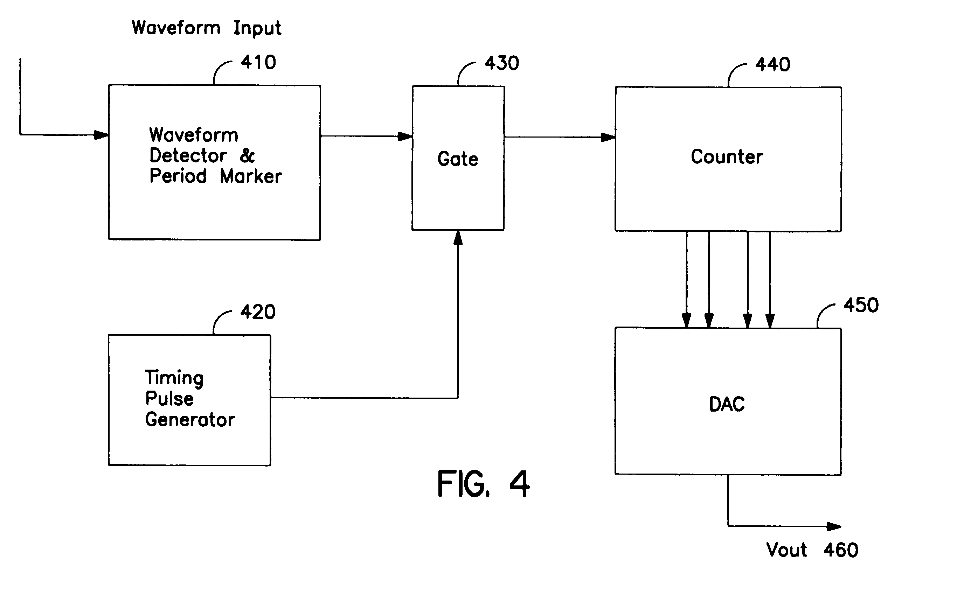

Figure 4 is a functional schematic of the frequency module 390 of Figure 3 in which the waveform produced by the proximity sensor 340 as it turns on and off the magnetic coil 330 is input to a waveform detector and period marker 410. Timing pulse generator 420 produces a timing pulse which is used by gate 430 in conjunction with counter 440 to produce a digital signal indicative of the frequency of the input waveform from the proximity sensor 340. A digital-to-analog converter (DAC) 450 converts the digital output of the counter 440 to an analog voltage indicative of the frequency of the proximity sensor 340.

Referring again to Figure 3, also housed in enclosure 302 is data logger 350 which comprises an analog to digital converter, digital memory and a connection to port 370 which is a pressurized low-temperature receptacle. Data logger 350 is capable of storing over 32,000 frequency readings or approximately 1.5 hours of data. Data logger 350 may also comprise a removable memory device which may be removed from device 300 upon opening of enclosure 302 and thereafter used to access the stored data.

Battery 362 is used to provide power to data logger 350 and is a standard 9 volt cell. Main Batteries 360 are rechargeable batteries preferably made of nickel cadmium (NiCad) or lithium cells which each provide 12 volts. Arranged in series the main batteries 360 provide 24 Volts of direct current (DC). An AC adapter (not shown) may be used to recharge the main batteries 360 using 120 VAC current through recharging port 364. Power switch 366 is used to power the device 300 on or off.

Marker switch 368 is used to provide an indication in the data that a new set of readings is being recorded by the data logger 350.

Partial enclosure 304 protects but does not enclose weights 320 and arm 310. Weights 320 may be disks, cubes, cylinders of other shaped and are composed of a material which adsorbs water. The material of the preferred embodiment is a porous absorbent cloth or block , such as chamois or chamois - like material.

Arm 310 is mounted to the enclosure 302 using spring-steel, preferably a stainless spring-steel, which provides a means for movement of the arm toward and away from magnetic coil 330.

Electrical current from main battery 360 can also be used to heat arm 310 in order to heat weights 320 thereby to simulate the "cooking" of the product and the effect of the heat on the evaporation of the fluid or the sublimation of the solid from weights 320. The resistive heating element 395 shown connected to the main battery 360 is an example of such a means for heating arm 310 and weights 320.

## Claims

1. Apparatus (1, 300) for estimating the change in mass of a food item during processing comprising: an arm (10, 310); a weight (20, 320) capable of absorbing a fluid or of supporting a solid on at least one end of the arm (10, 310); an oscillator (35, 330) adapted to oscillate the arm (10, 310) and weight (20, 320) at its natural harmonic frequency and generating a signal indicative of such oscillation; a frequency module (40, 390) capable of determining the instantaneous natural harmonic frequency of the weight and arm from the signal indicative of oscillation; and, a data logger (50, 350) capable of logging data as to the natural harmonic frequency of oscillation of the arm (10, 310) as the natural harmonic frequency of oscillation changes due to changes in the mass of said weight (20, 320) as the fluid evaporates or the solid sublimates during processing.

2. Apparatus according to claim 1 wherein the weight (20, 320) is made of a material which absorbs fluids so that changes in the mass of the fluid contained in the weight may be detected over time by changes in the natural harmonic frequency of oscillation of the weight (20, 320) and arm (10, 310).

3. Apparatus according to claim 2 wherein the fluid is water and at least a portion of the weight (20, 320) comprises a hydrophilic material.

4. Apparatus according to claim 1 wherein the weight (20, 320) is made of a material which supports a solid so that changes in the mass of the solid supported by the weight (20, 320) may be detected over time by changes in the natural harmonic frequency of oscillation of said weight and arm.

5. Apparatus according to any preceding claim comprising a data port (70, 370) whereby the logged data is communicated through the data port to an external computer.

6. Apparatus according to claim 5 comprising a transmitting means whereby the logged data is transmitted to a receiver for further communication to an external computer.

7. Apparatus according to any preceding claim comprising a heater (395) capable of heating the weight (320).

8. Apparatus according to claim 7 wherein the heater comprises a resistive heating element (395).

9. Apparatus according to any preceding claim wherein the arm (310) has two extensions of equal length and a weight (320) at the end of each of the extensions.

10. Apparatus according to any preceding claim comprising a primary enclosure (302) for protecting at least a portion of the oscillation means (330), the determining means (340) and the data logging means (390) from the food processing environment.

11. Apparatus according to claim 10 comprising a second enclosure (304) for protecting the arm (310) and the weight (320) from impact while allowing access to the food processing environment.

12. A method of monitoring the change in mass of a food item during processing of the food item comprising the steps of: introducing a weighted arm into a food process; oscillating the weighted arm; determining the frequency of oscillation of the weighted arm, and logging the frequency of oscillation for a plurality of time intervals into a memory device.

13. A method according to claim 12 comprising the further step of communicating the logged frequencies to an external computer.

14. A method according to claim 12 or 13 comprising the further step of correlating each of the logged frequencies with a predetermined mass of the weighted arm so as to generate a set of data values representing the change in the mass of the arm over time.

15. A method according to any of claims 12, 13 or 14 wherein the weighted arm has a fluid absorbent weight at the end of a non-absorbent arm for absorbing a predetermined amount of a fluid capable of evaporating during processing.

16. A method according to claim 15 comprising selecting the fluid so as to evaporate during processing at a rate necessary to maximize the difference between the minimum and maximum data values over time.
